# EUROPEAN PATENT APPLICATION

(11) **EP 1 738 896 A1**
(43) Date of publication of application: **03.01.2007**
(21) Application number: 05105731.3
(22) Date of filing: 28.06.2005
(51) Int. Cl.: B32B 7/02

(54) **Multilayer film with septum layer**

(71) Applicant: NOVO NORDISK A/S, 2880 Bagsvaerd (DK)
(72) Inventor: Sparholt, Philip Albert, 2765 Smorum (DK); Hansen, Lasse, 2660 Brondby Strand (DK)
(74) Representative: Noergaard, Torsten

(57) **Abstract**

A flexible multilayer film for forming a container defining a liquid-tight chamber for storing a liquid. The film comprises a first layer (1) and a second layer (2). The first layer (1) is a barrier layer, eg. a PCTFE layer, which is arranged inwardly of the second layer (2) as seen in a direction from the chamber of the container formed from the multilayer film. The second layer (2) is a septum layer, eg. a TPE layer, having self-sealing properties so as to seal around a hypodermic needle penetrating said film. As seen the above direction an innermost surface (5) of the film is weldable onto itself and is preferably made of a weldable layer (3) comprising PE and/or PP.

## Description

### Technical Field

The present invention relates to a multilayer film for forming a container defining a liquid-tight chamber for storage of liquid solutions or suspensions, for example of medicaments, optionally containing preservatives, and a container made partially or completely from a multilayer film.

### Background Art

Some medicaments are delivered to the patients in solid form, others in liquid form. Often, the liquid medicaments are delivered in a container. Some containers consist only or mainly of glass, others consist only or mainly of other materials such as plastic.

Medicaments in solid form are often marketed in a glass container or a plastic container. An example of a plastic container is a blister package.

In a pharmaceutical composition in liquid form, the active ingredient is present in dissolved or suspended form. In addition to the active ingredient, a pharmaceutical composition may contain a pharmaceutical active carrier, a disintegrator, a stabilizer, or a buffer substance.

The route of administration varies between the different medicaments. Some medicaments are administered via the oral route, others are administered by injecting the medicament to the patient, for example, intravenously or subcutaneously. Many medicaments being peptides, for example, insulin, are administered by injections. Earlier, syringes were used for the injections. As far as insulin is concerned, it is becoming more and more common to use so-called pen systems for the injections. Furthermore, the use of pumps for administration by injection may become a popular way of administrations by injections. In some of the pumps, the aqueous composition will be present in a glass reservoir or another hard reservoir, in other pumps, aqueous compositions will be present in a flexible reservoir, for example a reservoir which is completely or mainly made of another material than glass, for example of plastic.

For many aqueous compositions, it is extremely difficult to find a non-glass material which can be used safely to store said aqueous composition until it is used by the patient.

One of the many difficulties is the high mobility of preservatives in welding layers based on polymers such as polyethylene (herein designated PE), polypropylene (herein designated PP), polyethylene terephthalate (herein designated PET) or the like combined with a high affinity of the preservatives to the widely used adhesives based on polyurethane used for laminating a welding layer to a moist barrier such as polychlorotrifluoroethylene (herein designated PCTFE). The result of tests of the known art plastic products containing a solution of a medicament with preservatives is that a fast and not desired reduction in the content of preservative in the medicated solution takes place.

WO 2005/000580 discloses a multilayer film suitable for forming a flexible container fulfilling the safety requirements for storage of pharmaceutical solutions containing a preservative such a phenol, m-cresol and benzyl alcohol.

### Disclosure of the Invention

The object of this invention is to provide an improved multilayer film for forming a container, especially a pouch-shaped container, and an improved container formed from said film.

Thus, an object of this invention is to provide a film for a container or a pouch which can be used for storage of sterile water-based drug formulations.

A further object of this invention is to provide a film for said container or pouch fulfilling specific functional requirements as regards physical properties after sterilization, chemical requirements after sterilization and cleanliness.

Hence, one object of this invention is to provide a film for said container or pouch which can be sterilized, eg. using gamma irradiation, electron beam, steam, or ethylene oxide.

A further object of this invention is to provide a film for a container or a pouch which, after sterilization, fulfils most of or all the following physical requirements: 1) the film is transparent, 2) the film provides a good barrier against water; 3) the film provides a good barrier against gasses, eg. oxygen and carbon dioxide; 4) the film provides a good barrier against preservatives, eg. phenol and metacresol ; 5) the film provides a good barrier against odours, eg. preservatives; 6) the film is resistant to environmental stress cracking, eg. oils and perfumes; 7) the film is resistant to flex-crack ; 8) the film has good sealing properties, eg. by welding; 9) the film does not de-laminate after sterilization, during processing or storage; and 10) the film does not relax significantly during storage and use.

A further object of this invention is to provide a film for said container or pouch which, after sterilization, fulfils most of or all of the following chemical requirements: 1) the film does not emit substances to a drug which can affect the health and safety of the patient (leachables); 2) the film has a very low level of extractables; and 3) the film is compatible with the drug formulation.

Yet another object of this invention is to provide a film for said container or pouch which, after sterilization, fulfils the following requirements for cleanliness: 1) it is possible to prepare the film under hygienic conditions; and 2) the final product must be free from dust and particles.

A further object of this invention is to provide a film which may be weldable onto itself to form the above container or pouch.

A further object of this invention is to provide a film for said container or pouch fulfilling specific health and safety requirements, preferably most of or all of the requirements mentioned in: 1) European Pharmacopoeia (Ph. Eur.) 2002, 4th edition ; 2) The United States Pharmacopeia (USP) 25; 3) Japanese Pharmacopeia (JP) XIV ; 4) EEC Directive 90/128 + amendments "Relating to plastics materials and articles intended to come into contact with foodstuffs" ; 5) Code of federal regulations (CFR) Title 21 Food and Drugs, part 170-190; 6) 111/9090/90 EN. Plastic Primary Packaging Materials. Note for Guidance; and 7) Guidance for Industry. Container Closure Systems for Packaging Human Drugs and Biologics, Chemistry, Manufacturing, and Controls Documentation. FDA, May 1999.

A further object of the invention is to provide a multilayer film having self-sealing properties so as to seal around a hypodermic needle having penetrated the film.

Another object of the invention is to provide a film having resealable properties so as to reseal itself in an area penetrated by a hypodermic needle when the needle is removed.

A further object of the present invention is to provide film suitable for being formed into a container, especially a pouch, on a form, fill and seal machine.

Another object of the invention is to provide a flexible container.

Another object of the invention is to provide transparent container.

Another object of the invention is to provide a container allowing sterilization.

Another object of the invention is to provide a container or pouch which can be used for storing liquid solutions or suspensions of medicaments, optionally containing preservatives.

Another object of the invention is to provide a container which has a sufficient transparency so as to enable inspection of the content of the container.

Another object of the invention is to provide a container which can be used to storage of liquid solutions or suspensions of medicaments, optionally containing preservatives.

Another object of the invention is to provide a container having barrier properties ensuring that the concentration of the active ingredient in the aqueous composition does not change substantially during storage for a sufficient period of time.

A further object of the invention is to provide a film for a container or pouch which can be used for storage of sterile water-based drug formulations.

Another object of the invention is to provide a container having barrier properties ensuring that the concentration of the active ingredient in the aqueous composition does not change substantially during storage for a sufficient period of time.

Another object of the invention is to provide a container having barrier properties ensuring that the concentration of any preservatives present in the aqueous composition does not change during storage for a sufficient period of time.

A further object of the invention is to provide a container or pouch which can be used as reservoir for a pump, said reservoir preferably containing a water-based drug formulation.

### Definitions

Co-extrusion covers a process, where two or more polymer materials are melded in two or more extruders and co-extruded together through a nozzle or systems of nozzles and cooled to form the co-extruded foil.

Extrusion lamination (also designated coex lamination) covers a process, where a feedstock in form of a film or foil of one material is coated through a flat nozzle or systems of flat nozzles from one or more extruders with one layer or more layers of melted material or materials and then cooled to form the extrusion-lamination film or foil.

Lamination covers a process, where two feedstocks of film are joined together by adding a proper adhesive to one film or foil, followed by the addition of the second film or foil forming the laminated film or foil.

A tie layer is a layer which is placed between two polymer layers with the object of ensuring that the two layers are joined together.

The term container, which herein also is designated pouch or reservoir, is an item which may contain a liquid. This container is made of a foil or film.

The term multilayer film includes any films having more than one layer independent of how this multilayer film is produced. Thus the multilayer film may be produced by co-extrusion, extrusion lamination, lamination, etc. and additionally a combination thereof.

The inner surface of the chamber of the container is in intimate contact with the liquid which is to be stored in said container.

A flexible item is an item which can bend or be bent easily and which does not break (unless it is bent too much). Herein in connection with the containers the term flexible indicates that if the container is subjected to a force, eg. by being filled with a liquid, it will change its form without breaking.

Herein the term "insulin" refers to insulin from any species such as porcine insulin, bovine insulin, and human insulin and salts thereof such as zinc salts, and protamin salts as well as active derivatives of insulin, and insulin analogues.

The term "active derivatives of insulin", is what a skilled person generally considers derivatives, vide general textbooks, for example, insulin having a substituent not present in the parent insulin molecule. The term "insulin analogues" refers to insulin, wherein one or more of the amino acid residues have been replaced by another amino acid residue and/or from which one or more amino acid residue has/have been deleted and/or from which one or more amino acid residue has/have been added with the proviso that said insulin analogue has a sufficient insulin activity. Using results from the so-called free fat cell assay, any skilled person, eg. a physician, knows when and which dosages of the insulin analogue to administer. Examples of insulin analogues are described in the following patents and equivalents thereto: US 5,618, 913, EP 254, 516, EP 280,534, US 5, 750, 497, and US 6,011, 007. Examples of specific insulin analogues are insulin aspart (i. e., AspB23 human insulin), insulin lispro (i. e., LysB23, ProB29 human insulin), and insulin glargin (i. e., GlyA2', ArgB3', ArgB32 human insulin). Herein, the term insulin also covers compounds, which can be considered being both an insulin derivative and an insulin analogue. Examples of such compounds are described in the following patents and equivalents thereto: US 5,750, 497, and US 6,011, 007. An example of a specific insulin analogue and derivative is insulin detemir (i. e., des-ThrB30 human insulin y LysB29 tetradecanoyl).

The term "U", when used herein, refers to insulin units. Most of the currently used (marketed) insulins (bovine, porcine, human, lispro, aspart, and glargine) have a potency of one unit which equals 6 nmol. Long-acting acylated insulins have reduced potency com- pared to human insulin. Thus, for insulin detemir one unit corresponds to 24 nmol. For other insulins, the relation between U and nmol can be determined, if not known already, for example, by determining the amount giving a similar pharmacological (blood glucose lowering) effect as that of human insulin.

Herein, the word "comprise" is to be interpreted broadly meaning "include", "contain" or "comprehend" (vide Guidelines for Examination in the European Patent Office 2000, part C, Chapter 111, 4.13).

In one aspect, the present invention relates to a flexible multilayer film for forming a container defining a liquid-tight chamber for storing a liquid, said film comprising a first layer and a second layer, said first layer being a barrier layer and arranged inwardly of said second layer as seen in a direction from the chamber of the container formed from the said film, said second layer being a septum layer having self-sealing properties so as to seal around a hypodermic needle penetrating said film, and as seen the above direction an innermost surface of said film being weldable.

According to an embodiment of the invention, the innermost surface of the film is formed of said first layer.

According to another embodiment of the invention, innermost surface of the film may be formed of a third layer being a weldable layer, preferably arranged adjacent the barrier layer.

According to another embodiment of the invention, the weldable layer comprises polyethylene (PE) and/or polypropylene (PP).

According to another embodiment of the invention the thickness of the weldable layer is more than approximately 10 µm, preferably more than approximately 20 µm and less than approximately 60 µm, preferably less than approximately 50 µm.

According to another embodiment of the invention, a fourth layer being also an additional weldable layer is arranged outwardly of the barrier layer and preferably adjacent thereto, said additional weldable layer preferably being identical to the third layer.

According to another embodiment of the invention, the barrier layer comprises fluoroplastics.

According to another embodiment of the invention the barrier layer is a polychlorotrifluoroethylene layer (PCTFE-layer).

According to another embodiment of the invention the thickness of the barrier is more than approximately 40 µm and less than approximately 100 µm, preferably less than 75 µm.

According to another embodiment of the invention the septum layer has self-sealing properties so that the septum layer reseals itself in the area penetrated by the needle when the needle is removed.

According to another embodiment of the invention the septum layer comprises an elastomer.

According to another embodiment of the invention the septum layer comprises a rubber material, eg. silicon rubber.

According to another embodiment of the invention the septum layer comprises a thermoplastic elastomer (TPE).

According to another embodiment of the invention the thermoplastic elastomer is a block copolymer selected from the group comprising styrene block copolymers (TPE-S), thermoplastic co-polyesters (TPE-E), thermoplastic polyurethanes (TPE-U) and polyether block amides (TPE-A).

According to another embodiment of the invention the thermoplastic elastomer is a poly blend selected from the group comprising thermoplastic polyolefins (TPE-O) and thermoplastic vulcanizate (TPE-V).

According to another embodiment of the invention the thickness of the septum layer is between about 1000 µm and about 100 µm, preferably between 700 µm and 200 µm, and especially between 600 µm and 300 µm.

According to another embodiment of the invention the hardness of the septum layer ranges from about 20 to 90 Shore A, preferably from about 30 to 70 Shore A.

According to another embodiment of the invention the multilayer film is at least substantially transparent.

According to another embodiment of the invention the film is formed by co-extrusion, extrusion lamination or lamination, tie layers optionally being arranged between the different layers of the film.

In another aspect, the present invention relates to a container for storing a liquid in a liquid-tight chamber, said container being made from a flexible multilayer film according any one of the preceding claims, wherein when said chamber is filled with water and stored at a temperature at about 5°C for 24 months less than 10 % (weight/weight), preferably less than 5 % (weight/weight), more preferably less than 3 % (weight/weight) of the content of water diffuses out from the container.

According to an embodiment of the invention when said chamber is filled with water containing about 1.8 mg/mL (19 mM) of phenol and stored at a temperature of about 5°C for 24 months, the change in the concentration of phenol in the liquid is less than about 10 % (weight/weight), preferably less than 5 % (weight/ weight), more preferably less than 3 % (weight/weight).

According to another embodiment of the invention when said chamber is filled with water containing about 1.8 mg/mL (19 mM) of phenol and stored at a temperature of about 37°C for 12 weeks, the change in the concentration of phenol in the liquid is less than about 10 % (weight/weight), preferably less than 5 % (weight/weight), more preferred less than 3 % (weight/weight).

According to another embodiment of the invention when the chamber is filled with water containing 2.06 mg/mL (19 mM) of m-cresol and stored at a temperature of about 5°C for 24 months, the change in the concentration of m-cresol is less than about 10 % (weight/weight), preferably less than about 5 % (weight/weight), more preferred less than about 2 % (weight/weight).

According to another embodiment of the invention when the chamber is filled with water containing 2.06 mg/mL (19 mM) of m-cresol and stored at a temperature of about 37°C for 12 weeks, the change in the concentration of m-cresol is less than about 10 % (weight/weight), preferably less than about 5 % (weight/ weight), more preferred less than about 2 % (weight/weight).

According to another embodiment of the invention when the film is tested by the above test A the maximum loss of m-cresol is of about 10% (weight/ weight), preferably not more than about 5% (weight/weight).

According to another embodiment of the invention when the film is tested by the above test A the change in the pH value is about +/-0.2.

According to another embodiment of the invention when the film is tested by the above test B the maximum weight loss is of about 2.5% (weight/weight), preferably not more than about 1% (weight/weight).

According to another embodiment of the invention when the film is tested by the above test B the maximum loss of m-cresol is of about 10% (weight/weight), preferably not more than about 5% (weight/weight).

According to another embodiment of the invention when the film is tested by the above test B the change in the pH value is about +/-0.2.

According to another embodiment of the invention when the film is tested by the above test C the maximum weight loss is of about 2.5% (weight/ weight), preferably not more than about 2% (weight/weight).

According to another embodiment of the invention when the film is tested by the above test C the maximum loss of m-cresol is of about 10% (weight/weight), preferably not more than about 5% (weight/weight).

According to another embodiment of the invention when the film is tested by the above test C the maximum loss of phenol is of about 10% (weight/weight), preferably not more than about 5% (weight/weight).

According to another embodiment of the invention when the film is tested by the above test C the change in the pH value is not more than about +/-0.2.

According to another embodiment of the invention, the container passes the above test D for the dilution 1: 50, preferably the dilution 1: 100, more preferred the dilution 1: 200, even more preferred the dilution 1: 400.

According to another embodiment of the invention when completely filled with liquid, the chamber contains an amount of liquid which is at least about 0.5 ml, preferably at least about 1 ml, and not more than about 10 ml, preferably not more than about 5 ml, more preferred not more than about 2 ml and, preferably, the volume is about 1.5 ml.

According to another embodiment of the invention when completely filled with liquid, the chamber contains an amount of liquid which is from about 2 ml to about 4 ml, preferably about 3 ml.

According to another embodiment of the invention the container is partially or completely filled with a liquid pharmaceutical composition.

According to another embodiment of the invention at least 95 % (volume/volume), preferably at least 98 % (volume/volume), more preferred at least 99 % (volume/volume), and even more preferred at least 99.9 % (volume/volume), of the chamber contains a liquid pharmaceutical composition.

According to another embodiment of the invention the container is partially or completely filled with a liquid pharmaceutical composition wherein the active ingredient is a peptide.

According to another embodiment of the invention the peptide is insulin.

According to another embodiment of the invention the content of insulin is in the range from about 10 U/ml to about 1500 U/ml.

According to another embodiment of the invention the chamber of the container contains a preservative.

According to another embodiment of the invention the chamber of the container is partially or completely filled with a liquid pharmaceutical composition containing phenol.

According to another embodiment of the invention the chamber of the container is partially or completely filled with a liquid pharmaceutical composition containing m-cresol.

According to another embodiment of the invention the chamber of the container is partially or completely filled with a liquid pharmaceutical composition containing benzyl alcohol.

According to another embodiment of the invention the container is flexible.

According to another embodiment of the invention the container is a pouch.

According to another embodiment of the invention, the pouch is filled with a liquid and includes two walls made from a flexible multilayer film and joined together along welding seams so as to define the liquid-tight chamber.

According to another embodiment of the invention, the pouch is formed from a single sheet of the flexible multilayer film folded onto itself inner face to inner face so as to form the two walls.

Finally, according to another embodiment of the invention, the pouch is formed from two sheets of the flexible multilayer film so as to form the two walls.

### Brief Description of the Drawing(s)

The invention is explained in detail below with reference to preferred embodiment and the accompanying drawings, in which
Fig. 1 is a cross-sectional view of a first embodiment of a multilayer film according to the invention,
Fig. 2 is a cross-sectional view of a second embodiment of a multilayer film according to the invention,
Fig. 3 is a perspective view of a container according to the invention, said container having the shape of a pouch, and
Fig. 4 is a cross-sectional view of the pouch taken along the line IV-IV in Fig. 3.

### Description of Preferred Embodiments

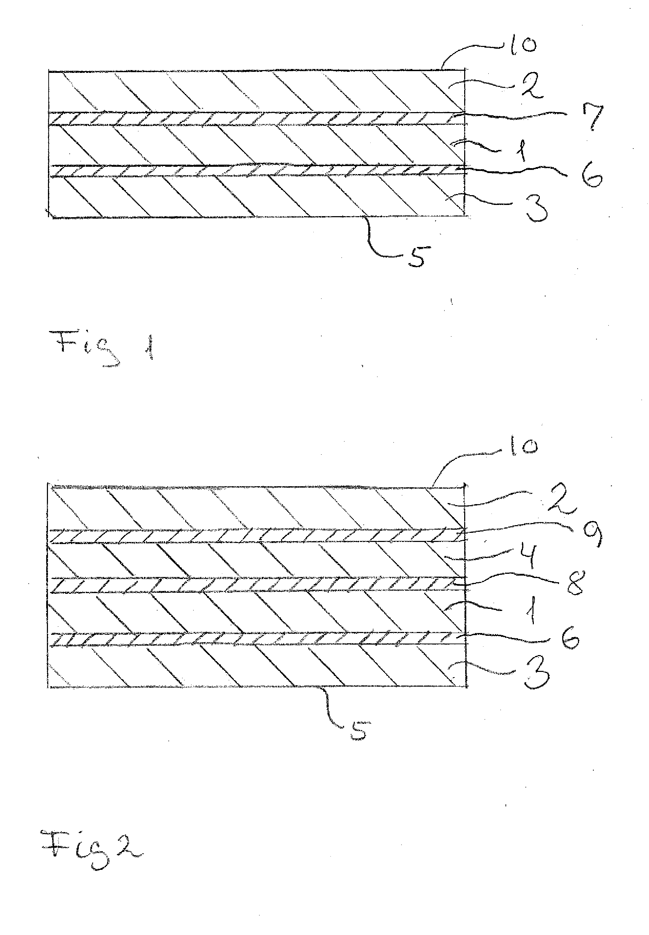

Fig. 1 discloses a cross-sectional of a first embodiment of the film according to the invention including a first layer 1 being a barrier layer and a third layer 3 being a weldable layer having an inner weldable surface 5. The inner weldable surface 5 is in intimate contact with the liquid which is to be stored in the chamber of a container formed from the film. In the following the terms inwardly, outwardly, inner, outer, etc. are to be understood as seen relative to a direction from the inner weldable surface 5 towards the first layer 1, ie. from the chamber of the container formed from the film towards the exterior of the container.

The third layer 3 and the first layer 1 are joined together by means of a tie layer 6 arranged between the outer surface of the inner weldable layer 3 and the inner surface of the first layer 1.

A second layer 2 being a septum layer is arranged outwardly of the first layer 1. The second layer 2 is joined to the first layer by means of an additional tie layer 7 arranged between an outer surface of the first layer or barrier layer and the inner surface of the second or septum layer 2. In this embodiment of the invention, the outer surface of the septum layer 2 forms the outer surface 10 of the film. However, it should be noted that one or more layers may be arranged outwardly of the septum layer 2, if so desired. The septum layer may be joined to the barrier layer by means of lamination or co-extrusion.

The inner weldable layer 3 of the film of the invention may consist of polyethylene (herein designated PE) or polypropylene (herein designated PE) or mixtures of PE and PP. PE consists of at least 75%, preferably at least 90 %, more preferred at least 95 %, (weight/weight) of polyethylene. PP consists of at least 75%, preferably at least 90 %, more preferred at least 95 %, (weight/weight) of polypropylene.

In a preferred embodiment of this invention, PE is as defined in European Pharmacopoeia 2001, 4 Edition, point 3.1.5, the content of which is hereby incorporated by reference. Examples of components present in PE are higher alkene homologues (C₃ to C₁₀,) and other additives mentioned therein.

In a preferred embodiment of this invention, PP is as defined in European Pharmacopoeia 2001, 4t Edition, point 3.1.6, the content of which is hereby incorporated by reference. Briefly, PP consists of the homopolymer of propylene or of a copolymer of propylene with not more than 25% of ethylene or a mixture (alloy) of polypropylene with not more than 25 % of polyethylene. It may contain additives, vide the above point 3.1.6.

In a preferred embodiment of this invention, the first or barrier layer 1 is a PCTFE layer consisting of at least 75%, preferably at least 90 %, more preferred at least 95 %, (weight/weight) of a polychlorotrifluoroethylene film, for example Aclars® from Honeywell, Morris Town, New Jersey, USA.

The tie layer 6, which may be used to secure that the second and first layers are joined together, may consist of an adhesive, for example polyethyleneimine (hereinafter designated PEI) or any other suitable tie layer. Alternatively, the tie layer can be a polyolefin having at least one functional moiety of an unsaturated carboxylic acid or an anhydride thereof. Examples are: Lotader, Lotryl, Evatane and Orevac ex. ATOFINA, Lavamelt ex. BAYER, PROVISTA and EASTAR ex. EASTMAN, Bynel ex. DuPont, AMPLIFY and INTEGRAL ex. Dow.

Further examples of tie layers are mentioned in WO 98/25762, the content of which is hereby incorporated by reference. As an example of a specific tie layer, reference could also be made to that used in Aclar® Cx 130 from Honeywell.

It is important to select a tie layer which does not have any undesired influence on the final film. In a preferred embodiment of this invention, the tie layer is so that only an inferior amount of phenol, m-cresol, or benzyl alcohol disappears during a period of 24 months at a temperature of 5°C or a period of 12 weeks at 27°C when an aqueous solution containing about 1.8 mg/ml of phenol is placed in a container according to this invention, *vide* the tests described below.

Known tie layers have a thickness of, eg. 2 or 8 µm. According to a preferred embodiment of this invention, the tie layer(s) in the film has a thickness in the range from about 1 µm to about 10 µm, preferably below about 8 µm, more preferred below about 6 µm.

For the preparation of the films according to this invention, the use of coex-laminated products is not limited to some of the specific polymer layers mentioned above such as PP or PE and PCTFE.

An example of a coex-laminated product not made of PP or PE and PCTFE is a co-extrudated PE-PET film laminated to PCTFE, which can be prepared by use of standard lamination techniques known in the art. This structure has a remarkable barrier against mobile molecules like m-cresol.

The septum layer 2 arranged outwardly of the barrier layer 1 has self-sealing properties so as to seal around a hypodermic needle or a similar needle means penetrating the film. Preferably, the self-sealing properties of the septum layer 3 ensure resealing of the area penetrated by the needle means when the needle means is removed from the film.

The septum layer is preferably made from an elastomeric material and especially from a thermoplastic elastomer (TPE). Examples of specific TPEs include TF3AAB from Kraiburg, HTC 7398/11 from Kraiburg, TF4STA from Kraiburg and Dynaflex G-2706 from GLS Corporation. The TPEs are all styrene-based block copolymers, primarily SEBS (polystyrene-b-polyethylene/buthylene-b-polystyrene). Another example of a specific TPE is Santoprene 8281-45MED, which is based on polyolefin (copolymer of mainly ethylene and 1-octene).

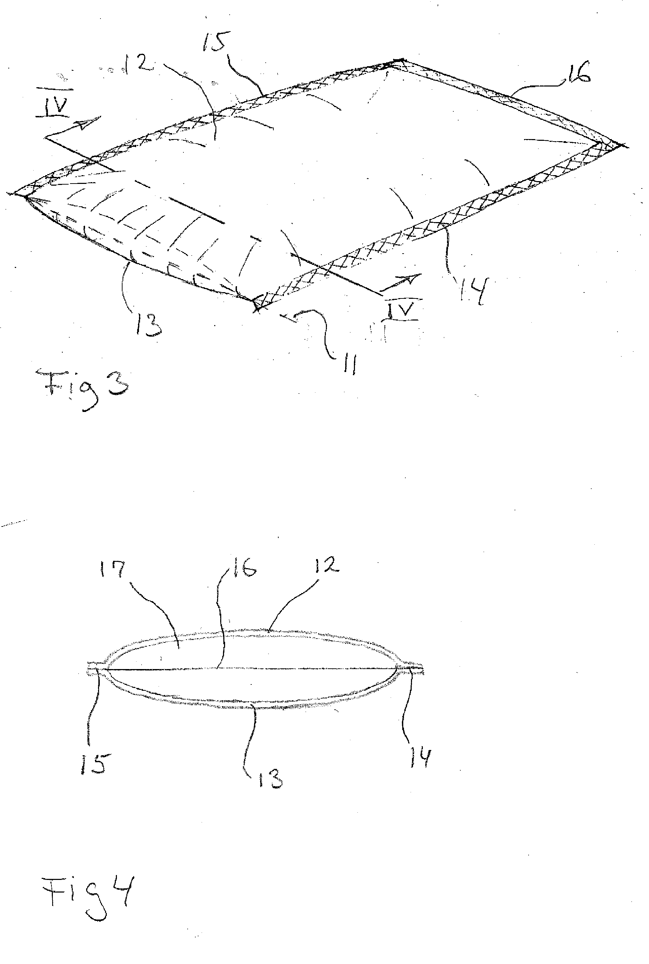

Fig. 2 shows a second embodiment of the film according to the invention. This embodiment differs from that shown in Fig. 1 by an additional weldable layer 4 being provided between the septum layer 2 and the barrier layer 1. As a consequence of the modification, the barrier layer 1 is joined to the additional weldable layer 4 by means of a tie layer 8 arranged between the outer face of the barrier layer 1 and the inner face of the additional weldable layer 4. This tie layer 8 is preferably of the same type as the tie layer 6 between the third or inner weldable layer 3 and the barrier layer 1. Furthermore, the additional weldable layer 4 is joined to the septum layer 2 by means of a further tie layer 9 arranged between the outer face of the additional weldable layer 4 and the inner face of the septum layer 2.

The barrier layer 1 and the weldable layers 3, 4 and the tie layers 8, 9 may be produced by co-extrusion or optionally by lamination. When produced by co-extrusion, the tie layers may be omitted dependent on the composition of the barrier layer 1 and the weldable layers 3, 4.

The septum layer 2, the barrier layer 1 and the weldable layers 3, 4 may be of the same type or similar to those mentioned with reference to the embodiment of the film shown in Fig. 1.

Fig. 3 and Fig. 4 disclose an embodiment of the container according to the invention formed as a pouch from a multilayer film according to the invention, eg. the film shown in Fig. 1 or 2.

As shown in Fig. 3, the pouch is made from a single sheet of film folded onto itself inner face to inner face along a folding line 11 so as to form two opposite walls 12, 13 of the pouch. The area of the line 11 forms an edge of the pouch. Other edges of the pouch are welded mutually inner face to inner face along welding seams 14, 15, 16 such that a liquid-tight chamber 17 is defined by the walls 12, 13, the folded area and the welding seams. The chamber contains the liquid in question, eg. insulin.

The shown pouch and any pouch having an edge formed by a folding line 11 may advantageously be formed, filled and welded on a vertical form, fill and welding machine. The shown pouch has a rectangular shape. It should, however, be noted that the pouch may have any desirable shape.

It should also be noted that the pouch may be made from two separate sheets of the flexible multilayer film, whereby welding seams are provided along all of the edges of the pouch.

In order to allow filling of the pouch, the flexible film has to have some flexibility.

In a preferred embodiment, the container of this invention consists of a film, which passes the following test for flexibility: Two rectangular pieces of the film being tested both having the size 60 mm x 20 mm are welded together with a 3 mm welding zone forming a welded test pouch and, thereafter, 1.5 ml of water is filled into the pouch. If the overpressure is below 100 mBar, the film has a sufficient flexibility.

In a preferred embodiment of this invention, the container of this invention is to be used for storage of an aqueous pharmaceutical composition, optionally a solution or suspension of a pharmaceutically active compound.

In a preferred embodiment of this invention, the active ingredient in said pharmaceutical composition is a protein. In a further preferred embodiment of this invention, the active ingredient is insulin, growth hormone or factor VII and analogs thereof. In a preferred embodiment of this invention, the amount of insulin in the aqueous solution or suspension is in the range with the lower limit being about 10 U/ml, preferably about 40 U/ml, more preferred about 100 U/ml, and even more preferred about 150 U/ml, and the upper limit being about 1500 U/ml, preferably about 1000 U/ml, more preferred about 500 U/ml, even more preferred about 300 U/ml.

In a preferred embodiment of this invention, the aqueous formulation contains a stabilizer. In a more preferred embodiment of this invention, the aqueous formulation contains phenol. In another preferred embodiment of this invention, the aqueous formulation contains m-cresol. In another preferred embodiment of this invention, the aqueous formulation contains benzyl alcohol. In a further preferred embodiment of this invention, the total concentration of phenol and/or m-cresol in the aqueous formulation is in the range from about 20 mM to about 50 mM, preferably in the range from about 30 mM to about 45 mM. The concentration of phenol and/or m-cresol is, *inter alia,* dependent on the concentration of insulin in the aqueous formulation. In a preferred embodiment of this invention, the amount of phenol in the aqueous solution is in the range from about 15 to about 25 mM. In another preferred embodiment of this invention, the amount of m-cresol in the aqueous solution is in the range from about 15 to about 25 mM. In another preferred embodiment of this invention, the amount of benzyl alcohol in the aqueous formulation is in the range from about 15 to about 25 mM. In another preferred embodiment of this invention, there is no benzyl alcohol present in the aqueous formulation.

### Test Methods

In a preferred embodiment, the container of this invention is prepared from pouch films passing some of or all of the following tests:

### Test A: Test for loss of m-cresol and pH change:

First, the film is subjected to irradiation with 2 x 25 kGy e-beam on a number of planar A4 sheets having a total thickness less than 1 cm. Thereafter, 10 cm² (2 x 5 cm²) of the film is cut into 15 minor parts sized (0.7 x 1 cm²) and immersed into 1.5 ml of a solution containing about 1.80 mg/mL (19 mM) phenol, 2.06 mg/mL (19 mM) m-cresol, 16.0 mg/mL (174 mM) glycerol, 1.25 mg/mL (7 mM) disodium hydrogenphosphat, 0.58 mg/mL (10 mM) sodium chloride and pH: 7.40. The immersed sample and a reference sample are placed in an incubator at 37°C for 1 week.

The content of m-cresol in the solution is analyzed by using a chromatographic method.

This test will show the total migration of m-cresol including the absorption directly into the adhesive at the edge. When stored at the above mentioned conditions, the following requirements should be fulfilled: The maximum loss of m-cresol should be 10%, preferably less than 5%. The pH value of the solution should not change more than +/-0.2.

### Test B: Test for permeation, loss of m-cresol and pH:

### Paddington cup test method modified from DS/EN 13726-2.

In this method, a film in test is placed between two flanges allowing 10 cm² of the inner film (PE, PP or any other welding layer) to be in contact with 5 ml of a solution containing phenol : about 1.80 mg/mL (19 mM), m-cresol : 2.06 mg/mL (19 mM), glycerol: 16.0 mg/mL (174 mM), disodiumhydrogenphosphat: 1.25 mg/mL (7 mM), sodium chloride : 0.58 mg/mL (10 mM), and pH: 7.40. The Paddington cup is placed upside down allowing direct contact between the solution and the foil in an incubator at 37°C and a relative humidity of max. 15% for 1 week along with a reference sample consisting of a Paddington cup with an inert aluminium foil. The Paddington cups are weighed before and after the storage. The content of m-cresol is analyzed by using a chromatographic method. This test is useful to test the total evaporation and will show the barrier properties against preservatives like m-cresol and phenol. When stored at the above mentioned conditions, the following requirements should be fulfilled: The maximum weight loss should be 2.5%, preferably less than 1 %; the maximum loss of m-cresol should be about 10%, preferably less than 5%, and the pH value should not change more than +/-0.2.

### Test C: Test of pouches with vehicle:

In this test, pouches are produced by welding the foil and by filling the pouches with vehicle. Some pouches are weighed before being stored at 37°C and a relative humidity of 15% and weighed after up to 12 weeks. Some pouches are stored at 37°C and tested for content of m-cresol and phenol at regular intervals up to 12 weeks. Glass vials are used as a reference. When stored at the above mentioned conditions for 12 weeks, the following requirements should be fulfilled: The maximum weight loss should not be more than 2.5%, preferably not more than 2%, the maximum loss of m-cresol should not be more than 10%, preferably not more than 5%, the maximum loss of phenol should not be more than 10%, preferably not more than 5%. The pH value should not change more than +/-0.2.

### Test D: Transparency of a filled pouch:

A filled pouch must fulfil the transparency requirement in the European Pharmacopoeia 2001, 4th Edition, part 3.2. 2.1 concerning plastic containers for aqueous solutions for parenteral infusion. In this method, solution S is diluted 1: 200 (for PE or PP) or 1:400 for other containers. This test can be modified by testing solution S diluted 1:50 or 1: 100.

### List of reference numbers.

- 1: First layer, barrier layer
- 2: Second layer, septum layer
- 3: Third layer, weldable layer
- 4: Fourth layer, additional weldable layer
- 5: Inner weldable surface
- 6: Tie layer
- 7: Further tie layer
- 8: Tie layer
- 9: Further tie layer
- 10: Outer surface
- 11: Folding line
- 12: Wall
- 13: Wall
- 14: Welding seam
- 15: Welding seam
- 16: Welding seam
- 17: Chamber

## Claims

1. A flexible multilayer film for forming a container defining a liquid-tight chamber for storing a liquid, said film comprising a first layer and a second layer, said first layer being a barrier layer and arranged inwardly of said second layer as seen in a direction from the chamber of the container formed from the said film, said second layer being a septum layer having self-sealing properties so as to seal around a hypodermic needle penetrating said film, and as seen the above direction an innermost surface of said film being weldable.

2. A flexible film according to claim 1, wherein the innermost surface of the film is formed of said first layer.

3. A flexible film according to claim 1, wherein the innermost surface of the film is formed of a third layer being a weldable layer, preferably arranged adjacent the barrier layer.

4. A flexible film according to claim 3, wherein the weldable layer comprises polyethylene (PE) and/or polypropylene (PP).

5. A flexible film according to claim 3 or 4, wherein the thickness of the weldable layer is more than approximately 10 µm, preferably more than approximately 20 µm and less than approximately 60 µm, preferably less than approximately 50 µm.

6. A flexible film according to any one of the claims 2-5, wherein a fourth layer being also an additional weldable layer is arranged outwardly of the barrier layer and preferably adjacent thereto, said additional weldable layer preferably being identical to the third layer.

7. A flexible film according to any one of the preceding claims, wherein the barrier layer comprises fluoroplastics.

8. A flexible film according to claim 7, wherein the barrier layer is a polychlorotrifluoroethylene layer (PCTFE-layer).

9. A flexible film according to claim 7 or 8, wherein the thickness of the barrier is more than approximately 40 µm and less than approximately 100 µm, preferably less than 75 µm.

10. A flexible film according to claim 1, wherein the septum layer has self-sealing properties so that the septum layer reseals itself in the area penetrated by the needle when the needle is removed.

11. A flexible film according to claim 1 or 10, wherein the septum layer comprises an elastomer.

12. A flexible film according to claim 11, wherein the septum layer comprises a rubber material, eg. silicon rubber.

13. A flexible film according to claim 11, wherein the septum layer comprises a thermoplastic elastomer (TPE).

14. A flexible film according to claim 13, wherein the thermoplastic elastomer is a block copolymer selected from the group comprising styrene block copolymers (TPE-S), thermoplastic co-polyesters (TPE-E), thermoplastic polyurethanes (TPE-U) and polyether block amides (TPE-A).

15. A flexible film according to claim 13, wherein the thermoplastic elastomer is a poly blend selected from the group comprising thermoplastic polyolefins (TPE-O) and thermoplastic vulcanizate (TPE-V).

16. A flexible film according to any one of the preceding claims, wherein the thickness of the septum layer is between about 1000 µm and about 100 µm, preferably between 700 µm and 200 µm, and especially between 600 µm and 300 µm.

17. A flexible film according to any one of the preceding claims, wherein the hardness of the septum layer is from about 20 to 90 Shore A, preferably from about 30 to 70 Shore A.

18. A flexible film according to any one of the preceding claims, wherein the multilayer film is at least substantially transparent.

19. A flexible film according to any one of the preceding claims, wherein the film is formed by co-extrusion, extrusion lamination or lamination, tie layers optionally being arranged between the different layers of the film.

20. A container for storing a liquid in a liquid-tight chamber, said container being made from a flexible multilayer film according any one of the preceding claims, wherein when said chamber is filled with water and stored at a temperature at about 5°C for 24 months less than 10 % (weight/weight), preferably less than 5 % (weight/weight), more preferably less than 3 % (weight/weight) of the content of water diffuses out from the container.

21. A container according claim 20, wherein when said chamber is filled with water containing about 1.8 mg/mL (19 mM) of phenol and stored at a temperature of about 5°C for 24 months, the change in the concentration of phenol in the liquid is less than about 10 % (weight/weight), preferably less than 5 % (weight/weight), more preferably less than 3 % (weight/weight).

22. A container according to claim 20 or 21, wherein when said chamber is filled with water containing about 1.8 mg/mL (19 mM) of phenol and stored at a temperature of about 37°C for 12 weeks, the change in the concentration of phenol in the liquid is less than about 10 % (weight/weight), preferably less than 5 % (weight/weight), more preferred less than 3 % (weight/weight).

23. A container according to claim 22, wherein when the chamber is filled with water containing 2.06 mg/mL (19 mM) of m-cresol and stored at a temperature of about 5°C for 24 months, the change in the concentration of m-cresol is less than about 10 % (weight/weight), preferably less than about 5 % (weight/weight), more preferred less than about 2 % (weight/weight).

24. A container according to any one of the preceding claims 20-23, wherein when the chamber is filled with water containing 2.06 mg/mL (19 mM) of m-cresol and stored at a temperature of about 37°C for 12 weeks, the change in the concentration of m-cresol is less than about 10 % (weight/weight), preferably less than about 5 % (weight/ weight), more preferred less than about 2 % (weight/weight).

25. A container according to any one of the preceding claims 20-24, wherein when the film is tested by the above test A the maximum loss of m-cresol is of about 10% (weight/weight), preferably not more than about 5% (weight/weight).

26. A container according to any one of the preceding claims 20-25, wherein when the film is tested by the above test A, the change in the pH value is about +/-0.2.

27. A container according to any one of the preceding claims 20-26, wherein when the film is tested by the above test B, the maximum weight loss is of about 2.5% (weight/ weight), preferably not more than about 1% (weight/weight).

28. A container according to any one of the preceding claims 20-27, wherein when the film is tested by the above test B, the maximum loss of m-cresol is of about 10% (weight/weight), preferably not more than about 5% (weight/weight).

29. A container according to any one of the preceding claims 20-28, wherein when the film is tested by the above test B the change in the pH value is about +/-0.2.

30. A container according to any one of the preceding claims 20-29, wherein when the film is tested by the above test C, the maximum weight loss is about 2.5% (weight/ weight), preferably not more than about 2% (weight/weight).

31. A container according to any one of the preceding claims 20-30, wherein when the film is tested by the above test C, the maximum loss of m-cresol is of about 10% (weight/ weight), preferably not more than about 5% (weight/weight).

32. A container according to any one of the preceding claims 20-31, wherein when the film is tested by the above test C, the maximum loss of phenol is of about 10% (weight/ weight), preferably not more than about 5% (weight/weight).

33. A container according to any one of the preceding claims 20-32, wherein when the film is tested by the above test C, the change in the pH value is not more than about +/-0.2.

34. A container according to any one of the preceding claims 20-33 passing the above test D for the dilution 1: 50, preferably the dilution 1: 100, more preferred the dilution 1: 200, even more preferred the dilution 1: 400.

35. A container according to any one of the preceding claims 20-34, wherein when completely filled with liquid, the chamber contains an amount of liquid which is at least about 0.5 ml, preferably at least about 1 ml, and not more than about 10 ml, preferably not more than about 5 ml, more preferred not more than about 2 ml and, preferably, the volume is about 1.5 ml.

36. A container according to any one of the preceding claims 20-34, wherein when completely filled with liquid, the chamber contains an amount of liquid which is from about 2 ml to about 4 ml, preferably about 3 ml.

37. A container according to any one of the preceding claims 20-36, wherein the container is partially or completely filled with a liquid pharmaceutical composition.

38. A container according to any one of the preceding claims 20-37, wherein at least 95 % (volume/volume), preferably at least 98 % (volume/volume), more preferred at least 99 % (volume/volume), and even more preferred at least 99.9 % (volume/volume), of the chamber contains a liquid pharmaceutical composition.

39. A container according to any one of the preceding claims 20-38, wherein the container is partially or completely filled with a liquid pharmaceutical composition wherein the active ingredient is a peptide.

40. A container according to claim 39, wherein the peptide is insulin.

41. A container according to claim 40, wherein the content of insulin is in the range from about 10 U/ml to about 1500 U/ml.

42. A container according to any one of the preceding claims 20-41, wherein the chamber of the container contains a preservative.

43. A container according to any one of the preceding claims 20-42, wherein the chamber of the container is partially or completely filled with a liquid pharmaceutical composition containing phenol.

44. A container according to any one of the preceding claims 20-43, wherein the chamber of the container is partially or completely filled with a liquid pharmaceutical composition containing m-cresol.

45. A container according to any one of the preceding claims 20-44, wherein the chamber of the container is partially or completely filled with a liquid pharmaceutical composition containing benzyl alcohol.

46. A container according to any one of the preceding claims 20-45, wherein said container is flexible.

47. A container according to any one of the preceding claims 20-46, wherein said container is a pouch.

48. A pouch according to claim 47, said pouch filled with a liquid and including two walls made from a flexible multilayer film and joined together along welding seam so as to define the liquid-tight chamber.

49. A pouch according to claim 47 or 48, said pouch being made from a single sheet of a flexible multilayer film folded onto itself inner face to inner face so as to form the two walls.

50. A pouch according to claim 47 or 48 being formed from two sheets of the flexible multilayer film arranged inner face to inner face so as to form the two walls.
